# EUROPEAN PATENT SPECIFICATION

(11) **EP 2 533 561 B1**
(45) Date of publication and mention of the grant of the patent: **26.08.2015**
(21) Application number: 10853497.5
(22) Date of filing: 09.10.2010
(51) Int. Cl.: H04W 24/00

(54) **METHOD AND DEVICE FOR MEASURING PERFORMANCE OF BASE STATION**
VERFAHREN UND VORRICHTUNG ZUR MESSUNG DER LEISTUNG EINER BASISSTATION
PROCÉDÉ ET DISPOSITIF PERMETTANT DE MESURER LES PERFORMANCES D'UNE STATION DE BASE

(30) Priority: 23.06.2010 CN 201010217441
(43) Date of publication of application: 12.12.2012
(73) Proprietor: ZTE Corporation, Shenzhen, Guangdong 518057 (CN)
(72) Inventor: YANG, Dongliang, Shenzhen Guangdong 518057 (CN); LI, Pan, Shenzhen Guangdong 518057 (CN); ZENG, Min, Shenzhen Guangdong 518057 (CN)
(74) Representative: Regimbeau
(86) International application number: PCT/CN2010/077615
(87) International publication number: WO 2011/160358

(56) References cited:
- WO-A1-2008/131473
- WO-A2-2007/063426
- CN-A- 1 541 001
- CN-A- 101 068 213
- CN-A- 101 141 811
- CN-A- 101 232 454
- US-A1- 2006 268 906
- US-A1- 2008 049 641
- US-A1- 2009 061 844

## Description

### TECHNICAL FIELD

The present disclosure relates to the field of measurement of wireless communication network performance, and more particularly, to a method and apparatus for measuring performance of a base station.

### BACKGROUND

With the rapid development from the first generation analog voice services, to the second generation digital voice services, to the third generation digital voice and data services, and further to broadband and multifunctional integrated services after the third generation of mobile communications, design complexity of a base station is increasing, performance requirement for the base station is further raised, and requirements for performance measurement and management are raised accordingly.

Performance data is the most fundamental data basis for maintenance of communication system apparatuses, network planning and network optimization. Data acquisition and data aggregation of the performance data are performed through performance management which includes service statistics, performance measurement and network management data aggregation. A series of measurement tasks are formulated by network operation and maintenance staff according to monitoring requirements, and sent to base stations, From which the performance data collected by a corresponding service processing unit is acquired. However, the performance data has generally a large volume, and requirement for real-time of the performance data is relatively high.

Currently, there are three methods for realizing performance management as follows:
The first method is that: a base station sends all performance data to a network management system, and the required performance data is selected by operation and management staff via the network management system. The interface between the base station and the network management system is very simple. In addition, the performance data is acquired by the network management system according to needs, and a report is generated. Using this method, the data volume between the base station and the network management system is a huge burden and too many communication bandwidth resources are occupied between the base station and the network management system, thus resulting in serious waste of bandwidth resources.
The second method is that: a corresponding measurement task is formulated according to needs by operation and management staff and set in a base station in advance. A base station performance measurement unit sends the corresponding performance data to a network management system according to the measurement task. In this case, the data volume between the base station and the network management system is relatively small and the traffic can be controlled by sending the measurement task. However, during the practical operation and maintenance process, the performance measurement requirements vary constantly. The base station and the network management system need to be updated and modified continuously. The required coupling degree is relatively high and it is hard to deal with variations in the requirements rapidly.
The third method is that: a performance rule configuration table is formulated according to needs by operation and management staff and configured to a base station via a network management system. An event is reported is performed by the base station after service processing. More specifically, a base station performance management unit calculates collected original data according to the performance rule configuration table to generate performance data, wherein the corresponding performance data is reported by the base station according to a measurement task formulated by the operation and management staff. In this case, the base station can cope with varying requirements more flexibly. However, the network management system needs to be updated constantly with the changes of the requirements, and the calculation amount of generating a counter by the base station by using the configuration table is several times larger than the calculation amounts of the aforementioned two methods. In addition, the data volume for the network management system configuring the performance rule configuration table to the base station is very large, which requires higher processing capability of the main control board of the base station. The base station needs to be reconfigured when the measurement requirements change, and the software of the network management system needs to be modified and updated to adapt to data report of the base station.

Document US 2008/049641 A1 (EDWARDS STEPHEN K [US] ET AL) 28 February 2008 (2008-02-28) discloses a system and method for monitoring performance of a packet network include storing network performance information collected from a packet network, where the network performance information may distinguish network performance information associated with communications of data packets including real-time content and data packets including non-real-time content.

Document WO 2008/131473 A1 (UBO WIRELESS PTY LTD [AU]; RIDLEY PHILLIP ALLAN [AU]) 6 November 2008 (2008-11-06) discloses a wireless broadband network management system comprising a data collection engine to collect data concerning traffic levels through the network base transceiver stations (BTSs), and the BTSs to which particular customer premise equipment (CPE) can connect; and a processor to correlate the data collected; to monitor overall network performance; to aggregate performance of one or more CPEs and BTSs; to detect underperforming BTSs and CPEs; and to automate CPE connections and disconnections to improve network performance in real time.

Document WO 2007/063426 A2 (MOBILE HRATSKA D O O T [HR]; ANTIC MARIO [HR]; BORKOVIC BORIS [HR]; DA) 7 June 2007 (2007-06-07) discloses a system and a method for self optimizing a radio communication network comprising a plurality of radio cells, the system means for monitoring the network resource consumption and quality parameters individually for each cell, and means for distributing the network traffic dynamically between neighboring radio cells in order to maintain satisfactory quality of service in each radio cell.

Document US 2009/061844 A1 (TIERNAN FRANCIS A [US]) 5 March 2009 (2009-03-05) discloses a method, comprising: collecting base transceiver station performance data into a performance analysis and data collection application; transmitting the base transceiver station performance data wirelessly to a mobile application on a mobile device; and uploading the base transceiver station performance data from the mobile application on the mobile device wirelessly over an internet through a mobile network into a web application.

Document US 2006/268906 A1 (KNECKT JARKKO [FI]) 30 November 2006 (2006-11-30) discloses a wireless node, such as a wireless mesh point, may obtain performance information and then transmit a wireless beacon including the performance information. The performance information may include, for example, mesh point performance information and station performance information. One or more other wireless mesh points in the network may receive the performance information via the wireless beacon and may perform access control and/or packet forwarding based, at least in part, on the received performance information.

### SUMMARY

In view of the above, the main purpose of the present disclosure is to provide a method and apparatus for measuring performance of a base station, thus realizing measurement of the base station while saving bandwidths, and reducing plenty of calculations in the performance measurement of the base station.

To achieve the purpose above, the technical solution of the present disclosure is realized by the following:
The present disclosure provides a method for measuring performance of a base station, and the method includes:
   a counter rule base is formulated; and the counter rule base is loaded by a network management system;
   a measurement task is sent to a base station by the network management system, and original data is collected and reported to the network management system by the base station; and
   performance data is acquired by the network management system by using the counter rule base according to the reported original data.

Here, the counter rule base may include: an original data set, a counter base, and counter rules;
the original data set includes all original data of a base station that can be reported;
the counter base includes all counters required to calculate performance data of the base station;
the counter rule includes one or more mapping relationship between the original data and the one or more counters, operation type and condition information for measuring the performance, one or more original data corresponds with one or more performance data acquired by one or multiple operations of counters, and logical operation rule among results of a plurality of counters;
wherein the counter rule base is organized as a file which can be loaded by a network management system.

Here, the measurement task sent by the network management system may include: a measurement task type, and a period for reporting the measurement task.

Here, original data collected by the base station may be specifically the original data collected by the base station during the period for reporting the measurement task.

Here, the performance data is acquired by using the counter rule base may include that: the network management system receives the original data reported by the base station, finds a corresponding counter rule from the counter rule base according to a rule base identity capable of reflecting the performance data to be acquired by measurement, then obtains a required associated counter according to the counter rule, and then calculates the required performance data according to the required associated counter in combination with an operation type and condition information in the counter rule.

The present disclosure further provides an apparatus for measuring performance of a base station, and the apparatus includes: a counter rule base unit and a performance measurement unit, wherein
the counter rule base unit is configured to provide a counter rule base for the performance measurement unit;
the performance measurement unit is configured to load the counter rule base, send a measurement task to the base station, receive original data reported by the base station, and acquire performance data by using the counter rule base according to the original data.

Here, the counter rule base provided by the counter rule base unit may include: an original data set, a counter base, and counter rules;
the original data set includes all original data of a base station that can be reported;
the counter base includes all counters required to calculate performance data of the base station;
the counter rule includes one or more mapping relationship between the original data and the one or more counters, operation type and condition information for measuring the performance, one or more original data corresponds with one or more performance data acquired by one or multiple operations of counters, and logical operation rule among results of a plurality of counters;
wherein the counter rule base is organized as a file which can be loaded by a network management system.

Here, the measurement task sent by the performance measurement unit may include: a measurement task type, and a period for reporting the measurement task.

With the method and apparatus for measuring performance of a base station of the present disclosure, firstly a counter rule base is formulated according to needs and is loaded by a network management system; a measurement task is sent to a base station by the network management system, original data is collected and reported to the network management system by the base station; performance data is acquired by the network management system by using the counter rule base according to the reported original data. The base station and the network management system are enabled to be decoupled completely. Therefore, plenty of calculations in the performance measurement of the base station is greatly reduced. Furthermore, a new performance measurement task can be adapted by simple modification to the counter rule base, therefore the flexibility for different performance measurements by the base station and the network management system is increased.

### BRIEF DESCRIPTION OF THE DRAWINGS

Fig. 1 is a flowchart illustrating a method for measuring performance of a base station of the present disclosure;
Fig. 2 is a flowchart illustrating a method for acquiring performance data by a network management system by using a counter rule base of the present disclosure; and
Fig. 3 is a structural diagram illustrating an apparatus for measuring performance of a base station of the present disclosure.

### DETAILED DESCRIPTION

The technical solution of the present disclosure is further described hereinbelow in details with reference to the drawings and embodiments.

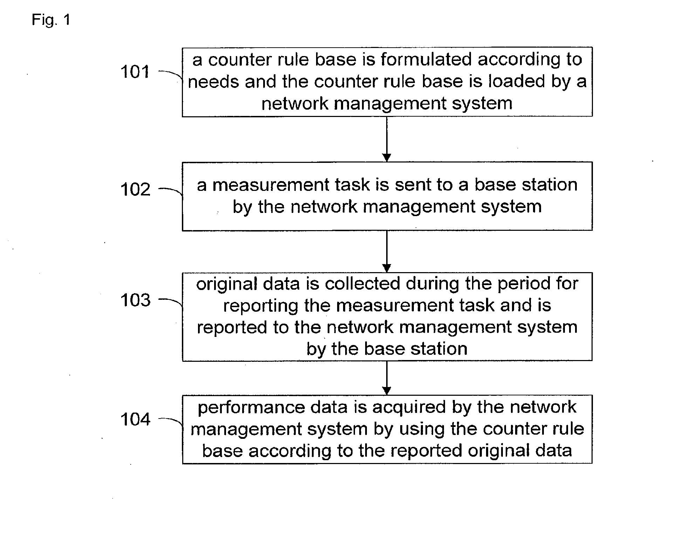

Fig. 1 is a flowchart illustrating a method for measuring performance of a base station of the present disclosure. As shown in Fig. 1, the method for measuring performance of a base station includes the following steps:
   Step 101: a counter rule base is formulated according to needs and the counter rule base is loaded by a network management system.

More specifically, the counter rule base includes: an original data set, a counter base, and counter rules, wherein the original data set includes all original data of a base station that can be reported. Since the original data of a base station that can be reported has been determined after the base station is designed, the content of the original data in the original data set is also determined. The counter base includes all counters required to calculate performance data of the base station. The counter base can be preset or modified according to actual needs. The counter rule include the mapping relationship between the original data and the counter when the performance data of the base station is calculated, and also include operation type and condition information for measuring the performance. The mapping relationship includes that one or more original data corresponds with one or more performance data acquired by one or multiple operations of counters. Furthermore, when multiple operations need to be performed by using one or more counters, the mapping relationship not only represents the relationship between the counters and the original data introduced into the counters, but also includes logical operation rule among results of a plurality of counters, e.g., adding, subtracting, multiplying, dividing, "more than", "less than", "AND", "OR" etc. By applying the counter rule base, it does not need to separately set a counter for each kind of performance data, while required performance data can be acquired by logical operations of a plurality of simple counters. In addition, it only needs to make simple modifications to the counter rule base to adapt to a new measurement task, thus the counter rule base has an advantage of flexible configuration.

Furthermore, the completed counter rule base is organized as a file which can be loaded by a network management system, e.g., an XML file or an EXCEL file. Then the network management system parses and loads the counter rule base file by loading the file. After loading, information of the counter rule base can be inquired in an information bar of the counter rule base, e.g., the mapping relationship corresponding to the performance data, and the creating date of the counter rule base etc.

Step 102: a measurement task is sent to the base station by the network management system.

More specifically, the network management system sends a measurement notification message according to a required measurement task type and notifies the base station to report the original data of the measurement task type. The measurement notification message includes a measurement task type and a period for reporting the measurement task, wherein, the measurement task type is that: during the design of the base station, according to processing flows of all functions, all performance-related data in the processing flows is designed as points which can be reported. These reported points can report performance-related original data during the operation of the base station. Furthermore, the original data which can be reported by the base station can be divided into many types, e.g., operation system data type, and wireless service data type etc., wherein different measurement task types can also be divided according to these different types of the original data.

Step 103: the original data is collected during the period for reporting the measurement task and is reported to the network management system by the base station.

More specifically, when there is no measurement task, a performance management unit of the base station does not store the received original data. After the measurement notification message is received, the performance management unit begins to collect the original data of the measurement task and buffers them. After the period for reporting the measurement task is timeout, the base station reports the buffered original data to the network management system.

Step 104: performance data is acquired by the network management system by using the counter rule base according to the reported original data.

More specifically, the network management system receives the performance-related original data reported by the base station,wherein the original data includes a rule base identity. A counter rule from the counter rule base is searched correspondingly according to the rule base identity, then obtains the required associated counter according to the counter rule, and then the required performance data is calculated according to the required associated counter in combination with an operation type and condition information in the counter rule.

Furthermore, after the performance data is obtained, a performance data report can be generated by combining the performance data with the corresponding counter information and then the performance data report is stored, or the performance data is directly reported to an upper level network management system.

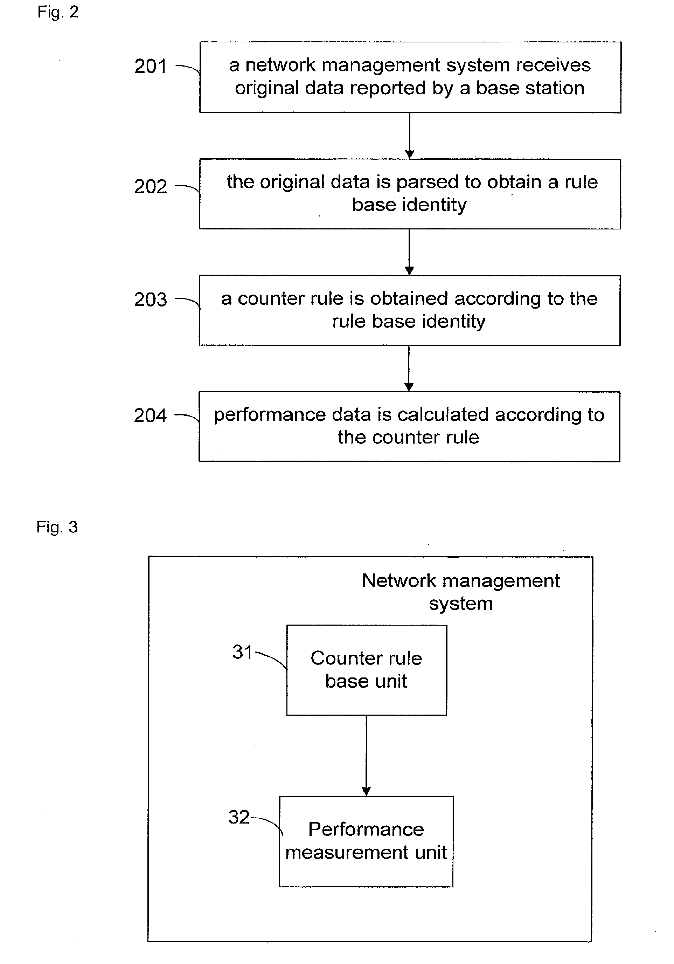

Fig. 2 is a flowchart illustrating a method for acquiring performance data by a network management system by using a counter rule base of the present disclosure. As shown in Fig. 2, the method for acquiring performance data using a counter rule base includes the following steps:
Step 201: a network management system receives original data reported by a base station.

More specifically, the original data is performance-related original data measured and reported by the base station.

Step 202: parsing to obtain a rule base identity in the original data.

More specifically, the rule base identity is carried by the reported original data and used for reflecting the required measurement task type, i.e., the required performance data acquired via measurement.

Step 203: a counter rule from the counter rule base is obtained according to the rule base identity.

More specifically, the counter rule includes the required operation type and condition information of the measurement task and counter indexing information.

Step 204: performance data is calculated according to the counter rule.

More specifically, the required counter is obtained according to the counter indexing information of the counter rule base, and then the performance data is calculated by the counter combining with the operation type and the condition information. For example, logical operations are performed for values of a plurality of counters, or a value obtained by a counter is introduced into another counter to continue to perform operation until the required performance data is obtained.

Fig. 3 is a structural diagram illustrating an apparatus for measuring performance of a base station of the present disclosure. As shown in Fig. 3, the apparatus for measuring performance of a base station is located in a network management system, and the apparatus specifically includes: a counter rule base unit 31 and a performance measurement unit 32.

The counter rule base unit 31 is configured to provide a counter rule base for a performance measurement unit 32.

More specifically, the counter rule base provided by the counter rule base unit 31 includes: an original data set, a counter base, and counter rules, wherein the original data set includes all original data of a base station which can be reported. Since the original data of a base station that can be reported has been determined after the base station is designed, the content of the original data in the original data set is also determined. The counter base includes all counters required to calculate performance data of the base station. The counter base can be preset or modified according to actual needs. The counter rule includes the mapping relationship between the original data and the counters when the required performance data is calculated. The mapping relationship is the operation type and condition information required by the original data and the counters, e.g., one or more original data corresponds with one or more performance data acquired by one or multiple operations of counters. Furthermore, when multiple operations need to be performed by using one or more counters, the mapping relationship not only represents the relationship between the counters and the original data introduced into the counters, but also includes logical operation rule among results of a plurality of counters, e.g., adding, subtracting, multiplying, dividing, "more than", "less than", "AND", and "OR" etc.

Furthermore, operation and maintenance staff can also modify the counter rule base via the counter rule base unit 31. Since the present disclosure performs associating the original data set and the counter base via the counter rule, and does not need to separately set each counter for the performance data of each kind of measurement, the required performance data can be acquired by logical operations of a plurality of simple counters. In addition, it only needs to make simple modifications to the counter rule base to adapt to a new measurement task, thus the counter rule base has an advantage of flexible configuration.

The performance measurement unit 32 is configured to load the counter rule base, send a measurement task to the base station, receive the original data reported by the base station, and acquire performance data via the counter rule base according to the original data.

More specifically, the performance measurement unit 32 parses and loads a counter rule base file by loading the file. After loading, information of the counter rule base can be inquired in an information bar of the counter rule base, e.g., the mapping relationship corresponding to the performance data, and the creating date of the counter rule base etc.

The performance measurement unit 32 sends a measurement notification message according to a required measurement task type and notifies the base station to report the original data of the measurement task type. The measurement notification message includes a measurement task type and a period for reporting the measurement task, wherein, the measurement task type is that: during the design of the base station, according to processing flows of all functions, all performance-related data in the processing flows is designed as points which can be reported. These reported points can report performance-related original data during the operation of the base station. Furthermore, the original data which can be reported by the base station can be divided into many types, e.g., operation system data type, and wireless service data type etc.,wherein different measurement task types can also be divided according to these different types of the original data.

The performance measurement unit 32 receives the performance-related original data reported by the base station, wherein the original data includes a rule base identity. A counter rule from the counter rule base is searched correspondingly according to a rule base identity, then the required associated counter is obtained according to the counter rule, and then the required performance data is calculated according to the associated counter in combination with an operation type and condition information in the counter rule.

Furthermore, after the performance data is obtained by the performance measurement unit 32, a performance data report can be generated by combining the performance data with the corresponding counter information and then the performance data report is stored, or the performance data is directly reported to an upper level network management system.

Furthermore, when there is no measurement task in the base station measured by the apparatus for measuring performance of a base station, a performance management unit of the base station does not store the received original data. After the measurement notification message is received, the performance management unit begins to collect the original data of the measurement task and buffers them. After the period for reporting the measurement task is timeout, the base station reports the buffered original data to the performance measurement unit 32.

What described above are only preferred embodiments of the present disclosure, but not intended to limit the protection scope of the present disclosure.

## Claims

1. A method for measuring performance of a base station, comprising:
formulating (101) a counter rule base;
loading, by a network management system, the counter rule base;
sending (102), by the network management system, a measurement task to a base station;
collecting (103) original data and reporting (103) the original data to the network management system by the base station; and
acquiring (104), by the network management system, performance data by using the counter rule base according to the reported original data;
**characterized in that** wherein the counter rule base comprises: an original data set, a counter base, and counter rules;
the original data set includes all original data of a base station that can be reported;
the counter base includes all counters required to calculate performance data of the base station;
the counter rule includes one or more mapping relationship between the original data and the one or more counters, operation type and condition information for measuring the performance;
the mapping relationship includes the original data corresponds with the performance data acquired by one or multiple operations of counters, and logical operation rule among results of a plurality of counters;
the logical operation rule includes adding, subtracting, multiplying, dividing, "more than", "less than", "AND", and "OR";
wherein the counter rule base is organized as a file which can be loaded by a network management system.

2. The method according to claim 1, wherein the measurement task sent by the network management system comprises: a measurement task type, and a period for reporting the measurement task.

3. The method according to claim 2, wherein the original data collected by the base station is the original data collected by the base station during the period for reporting the measurement task.

4. The method according to claim 1 , wherein acquiring (104) the performance data by using the counter rule base comprises that: after receiving (201) the original data reported by the base station, finding (203), by the network management system, a corresponding counter rule from the counter rule base according to a rule base identity capable of reflecting the performance data to be acquired by measurement, obtaining a required associated counter according to the counter rule, and then calculating (204) required performance data according to the required associated counter in combination with an operation type and condition information in the counter rule.

5. An apparatus for measuring performance of a base station, comprising: a counter rule base unit (31) and a performance measurement unit (32), wherein
the counter rule base unit (31) is configured to provide a counter rule base for the performance measurement unit (32);
the performance measurement unit (32) is configured to load the counter rule base, send a measurement task to a base station, receive original data reported by the base station, and acquire performance data by using the counter rule base according to the original data;
**characterized in that** wherein the counter rule base comprises: an original data set, a counter base, and counter rules;
the original data set includes all original data of a base station that can be reported;
the counter base includes all counters required to calculate performance data of the base station;
the counter rule includes one or more mapping relationship between the original data and the one or more counters, operation type and condition information for measuring the performance;
the mapping relationship includes the original data corresponds with the performance data acquired by one or multiple operations of counters, and logical operation rule among results of a plurality of counters;
the logical operation rule includes adding, subtracting, multiplying, dividing, "more than", "less than", "AND", and "OR";
wherein the counter rule base is organized as a file which can be loaded by a network management system.

6. The apparatus according to claim 5, wherein the measurement task sent by the performance measurement unit comprises: a measurement task type, and a period for reporting the measurement task.

7. The apparatus according to claim 6, wherein the original data received by the performance measurement unit (32) from the base station is the original data collected by the base station during the period for reporting the measurement task.

8. The apparatus according to claim 5, wherein the performance measurement unit (32) is configured to, after receiving the original data reported by the base station, find corresponding counter rule from the counter rule base according to a rule base identity capable of reflecting the performance data to be acquired by measurement, obtain a required associated counter according to the counter rule, and then calculate required performance data according to the required associated counter in combination with an operation type and condition information in the counter rule.

## Patentansprüche

1. Verfahren zur Messung der Leistung einer Basisstation, aufweisend:
Formulieren (101) einer Zähler-Regel-Basis;
Laden, über ein Netzwerk-Management-System, der Zähler-Regel-Basis;
Senden (102), über das Netzwerk-Management-System, einer Messaufgabe an eine Basisstation;
Sammeln (103) von Ursprungsdaten und Berichten (103) der Ursprungsdaten an das Netzwerk-Management-System durch die Basisstation; und
Erfassen (104), durch das Netzwerk-Management-System, von Leistungsdaten durch Anwenden der Zähler-Regel-Basis in Übereinstimmung mit den Ursprungsdaten;
**dadurch gekennzeichnet, dass** die Zähler-Regel-Basis Folgendes aufweist: einen Ursprungsdatensatz, eine Zählerbasis und Zählerregeln;
wobei der Ursprungsdatensatz alle Ursprungsdaten einer Basisstation umfasst, die berichtet werden können;
wobei die Zählerbasis alle Zähler umfasst, die für die Berechnung der Leistungsdaten der Basisstation erforderlich sind;
wobei die Zählerregel eine oder mehrere Abbildungsbeziehungen zwischen den Ursprungsdaten und dem einen oder den mehreren Zählern, dem Operationstyp und der Zustandsinformation zur Messung der Leistung aufweist;
wobei die Abbildungsbeziehung umfasst, dass die Ursprungsdaten mit den durch einen oder mehrere Vorgänge von Zählern angeforderten Leistungsdaten und der Logik-Operationsregel unter den Resultaten mehrerer Zähler übereinstimmen;
wobei die Logik-Operationsregel Addieren, Subtrahieren, Multiplizieren, Dividieren, "mehr als". "weniger als", "UND" und "ODER" umfasst;
wobei die Zähler-Regel-Basis als eine Datei organisiert ist, die durch ein Netzwerk-Management-System geladen werden kann.

2. Verfahren nach Anspruch 1, wobei die durch das Netzwerk-Management-System gesandte Messaufgabe Folgendes umfasst: einen Messaufgaben-Typ und eine Periode für das Berichten der Messaufgabe.

3. Verfahren nach Anspruch 2, wobei die von der Basisstation gesammelten Ursprungsdaten die von der Basisstation während der Periode für das Berichten der Messaufgabe gesammelten Ursprungsdaten sind.

4. Verfahren nach Anspruch 1, wobei das Erfassen (104) der Leistungsdaten unter Anwenden der Zähler-Regel-Basis Folgendes umfasst: nach Empfangen (201) der von der Basisstation berichteten Ursprungsdaten Finden (203), durch das Netzwerk-Management-System, einer entsprechenden Zählerregel von der Zähler-Regel-Basis gemäß einer Regelbasis-Identität mit der Kapazität, die durch die Messung zu erfassende Leistung widerzuspiegeln, Beziehen eines erforderlichen zugeordneten Zählers entsprechend der Zählerregel, und danach Berechnen (204) der erforderlichen Leistungsdaten in Übereinstimmung mit dem erforderlichen zugeordneten Zähler in Kombination mit einem Operationstyp und Zustandsinformation in der Zählerregel.

5. Vorrichtung zur Messung der Leistung einer Basisstation, aufweisend: eine Zähler-Regel-Basis-Einheit (31) und eine Leistungsmessungs-Einheit (32), wobei
die Zähler-Regel-Basis-Einheit (31) konfiguriert ist für ein Bereitstellen einer Zähler-Regel-Basis für die Leistungsmessungs-Einheit (32);
die Leistungsmessungs-Einheit (32) konfiguriert ist für ein Laden der Zähler-Regel-Basis, Senden einer Messaufgabe an eine Basisstation, Empfangen der von der Basisstation berichteten Ursprungsdaten und Erfassen von Leistungsdaten unter Anwenden der Zähler-Regel-Basis in Übereinstimmung mit den Ursprungsdaten;
**dadurch gekennzeichnet, dass**, wobei die Zähler-Regel-Basis Folgendes aufweist: einen Ursprungsdatensatz eine Zählerbasis und Zähler-Regeln;
wobei der Ursprungsdatensatz alle Ursprungsdatensatz einer Basisstation umfasst, die berichtet werden können;
wobei die Zählerbasis alle Zähler umfasst, die für die Berechnung der Leistungsdaten der Basisstation erforderlich sind;
wobei die Zählerregel eine oder mehrere Abbildungsbeziehungen zwischen den Ursprungsdaten und dem einen oder den mehreren Zählern, dem Operationstyp und der Zustandsinformation zur Messung der Leistung aufweist;
wobei die Abbildungsbeziehung umfasst, dass die Ursprungsdaten mit den durch einen oder mehrere Vorgänge von Zählern angeforderten Leistungsdaten und der Logik-Operationsregel unter den Resultaten mehrerer Zähler übereinstimmen;
wobei die Logik-Operationsregel Addieren, Subtrahieren, Multiplizieren, Dividieren, "mehr als". "weniger als", "UND" und "ODER" umfasst;
wobei die Zähler-Regel-Basis als eine Datei organisiert ist, die durch ein Netzwerk-Management-System geladen werden kann.

6. Vorrichtung nach Anspruch 5, wobei die von der Leistungsmessungs-Einheit gesandte Messaufgabe Folgendes aufweist: einen Messaufgaben-Typ und eine Periode für das Berichten der Messaufgabe.

7. Vorrichtung nach Anspruch 6, wobei die durch die Leistungsmessungs-Einheit (32) von der Basisstation empfangenen Ursprungsdaten die von der Basisstation während der Periode für das Berichten der Messaufgabe gesammelten Ursprungsdaten sind.

8. Vorrichtung nach Anspruch 5, wobei die Leistungsmessungs-Einheit (32) konfiguriert ist für, nach Empfangen der von der Basisstation berichteten Ursprungsdaten, ein Finden einer entsprechenden Zählerregel von der Zähler-Regel-Basis gemäß einer Regelbasis-Identität mit der Kapazität, die durch die Messung zu erfassende Leistung widerzuspiegeln, ein Beziehen eines erforderlichen zugeordneten Zählers entsprechend der Zählerregel, und danach ein Berechnen der erforderlichen Leistungsdaten in Übereinstimmung mit dem erforderlichen zugeordneten Zähler in Kombination mit einem Operationstyp und Zustandsinformation in der Zählerregel.

## Revendications

1. Procédé pour mesurer une performance d'une station de base, comprenant :
la formulation (101) d'une base de règle de compteur ;
le chargement, par un système de gestion de réseau, de la base de règle de compteur ;
l'envoi (102), par le système de gestion de réseau, d'une tâche de mesure à une station de base ;
la collecte (103) de données d'origine et le rapport (103) des données d'origine au système de gestion de réseau par la station de base ; et
l'acquisition (104), par le système de gestion de réseau, de données de performance en utilisant la base de règle de compteur selon les données d'origine rapportées ;
**caractérisé en ce que** dans lequel la base de règle de compteur comprend : un ensemble de données d'origine, une base de compteur, et des règles de compteur ;
l'ensemble de données d'origine inclut toutes les données d'origine d'une station de base qui peuvent être rapportées ;
la base de compteur inclut tous les compteurs requis pour calculer des données de performance de la station de base ;
la règle de compteur inclut une ou plusieurs relations de mappage entre les données d'origine et les un ou plusieurs compteurs, un type d'opération et des informations de condition pour mesurer la performance ;
la relation de mappage inclut les données d'origine correspondant aux données de performance acquises par une ou de multiples opérations de compteurs, et une règle d'opération logique parmi des résultats d'une pluralité de compteurs ;
la règle d'opération logique inclut l'addition, la soustraction, la multiplication, la division, « plus de », « moins de », « ET », et « OU » ;
dans lequel la base de règle de compteur est organisée comme un fichier qui peut être chargé par un système de gestion de réseau.

2. Procédé selon la revendication 1, dans lequel la tâche de mesure envoyée par le système de gestion de réseau comprend : un type de tâche de mesure, et une période pour rapporter la tâche de mesure.

3. Procédé selon la revendication 2, dans lequel les données d'origine collectées par la station de base sont les données d'origine collectées par la station de base pendant la période pour rapporter la tâche de mesure.

4. Procédé selon la revendication 1, dans lequel l'acquisition (104) des données de performance en utilisant la base de règle de compteur comprend le fait de : après la réception (201) des données d'origine rapportées par la station de base, trouver (203), par le système de gestion de réseau, une règle de compteur correspondante à partir de la base de règle de compteur selon une identité de base de règle capable de refléter les données de performance devant être acquises par la mesure, obtenir un compteur associé requis selon la règle de compteur, et ensuite calculer (204) des données de performance requises selon le compteur associé requis en combinaison avec un type d'opération et des informations de condition dans la règle de compteur.

5. Appareil pour mesurer une performance d'une station de base, comprenant : une unité de base de règle de compteur (31) et une unité de mesure de performance (32), dans lequel
l'unité de base de règle de compteur (31) est configurée pour fournir une base de règle de compteur à l'unité de mesure de performance (32) ;
l'unité de mesure de performance (32) est configurée pour charger la base de règle de compteur, envoyer une tâche de mesure à une station de base, recevoir des données d'origine rapportées par la station de base, et acquérir des données de performance en utilisant la base de règle de compteur selon les données d'origine ;
**caractérisé en ce que** dans lequel la base de règle de compteur comprend : un ensemble de données d'origine, une base de compteur, et des règles de compteur ;
l'ensemble de données d'origine inclut toutes les données d'origine d'une station de base qui peuvent être rapportées ;
la base de compteur inclut tous les compteurs requis pour calculer des données de performance de la station de base ;
la règle de compteur inclut une ou plusieurs relations de mappage entre les données d'origine et les un ou plusieurs compteurs, un type d'opération et des informations de condition pour mesurer la performance ;
la relation de mappage inclut les données d'origine correspondant aux données de performance acquises par une ou de multiples opérations de compteurs, et une règle d'opération logique parmi des résultats d'une pluralité de compteurs ;
la règle d'opération logique inclut l'addition, la soustraction, la multiplication, la division, « plus de », « moins de », « ET », et « OU » ;
dans lequel la base de règle de compteur est organisée comme un fichier qui peut être chargé par un système de gestion de réseau.

6. Appareil selon la revendication 5, dans lequel la tâche de mesure envoyée par l'unité de mesure de performance comprend : un type de tâche de mesure, et une période pour rapporter la tâche de mesure.

7. Appareil selon la revendication 6, dans lequel les données d'origine reçues par l'unité de mesure de performance (32) en provenance de la station de base sont les données d'origine collectées par la station de base pendant la période pour rapporter la tâche de mesure.

8. Appareil selon la revendication 5, dans lequel l'unité de mesure de performance (32) est configurée pour, après la réception des données d'origine rapportées par la station de base, trouver une règle de compteur correspondante à partir de la base de règle de compteur selon une identité de base de règle capable de refléter les données de performance devant être acquises par la mesure, obtenir un compteur associé requis selon la règle de compteur, et ensuite calculer des données de performance requises selon le compteur associé requis en combinaison avec un type d'opération et des informations de condition dans la règle de compteur.
